# EUROPEAN PATENT SPECIFICATION

(11) **EP 2 399 059 B1**
(45) Date of publication and mention of the grant of the patent: **17.05.2017**
(21) Application number: 10743387.2
(22) Date of filing: 22.02.2010
(51) Int. Cl.: F16N 19/00, B05C 17/01, F16N 11/08, F16N 13/10, F16N 7/38

(54) **FLUID HOLDER AND ELECTROMECHANICAL LUBRICATOR EMPLOYING SAME**
FLUIDBEHÄLTNIS UND DIESES EINSETZENDE ELEKTROMECHANISCHE SCHMIERVORRICHTUNG
DISPOSITIF DE RETENUE DE FLUIDE ET LUBRIFICATEUR ÉLECTROMÉCANIQUE L'UTILISANT

(30) Priority: 22.02.2009 US 390481
(43) Date of publication of application: 28.12.2011
(73) Proprietor: Stephania Holdings Inc., Delta, BC V4G 1 H3 (CA)
(72) Inventor: ORLITZKY, Stephan Karl, Delta, British Columbia V4M 2J3 (CA); SHEREMETA, Daniel Joseph, Delta, British Columbia V4M 2X9 (CA)
(74) Representative: Zacco Sweden AB
(86) International application number: PCT/CA2010/000259
(87) International publication number: WO 2010/094142

(56) References cited:
- EP-A1- 0 704 654
- GB-A- 413 021
- US-A- 1 918 145
- US-A- 5 271 528
- US-A- 5 971 229
- US-B2- 6 675 992
- US-B2- 6 802 394
- US-B2- 7 228 941

## Description

### BACKGROUND OF THE INVENTION

### 1. Field of Invention

The invention relates generally to lubrication, and more particularly to a fluid holder and an electromechanical lubricator employing the same.

### 2. Description of Related Art

Known electromechanical lubricators include fluid holders that are detachably coupled to drive assemblies. In known electromechanical lubricators, the drive assembly causes rotation of a threaded member that is threaded through a threaded piston, urging the threaded piston in a direction that tends to expel fluid out of a fluid chamber through a fluid outlet. However, particularly with viscous fluids, rotation of the threaded member tends to cause pressure to accumulate in the fluid chamber, which results in a thrust force along the threaded member against the drive assembly. The thrust force exerted by the threaded member against the drive assembly can cause increased friction in the drive assembly. This increased friction may accelerate wear of the drive assembly, for example by causing misalignment of gears in the drive assembly, which may result in reduced life span for the drive assembly. The increased friction also requires delivery of more power by the drive assembly, thereby shortening the life span of batteries or other power sources for the drive assembly. The increased friction from the thrust force on the drive assembly may also limit the pressure that the drive assembly can exert on the fluid, and may limit the temperature range in which the lubricator can operate. Also, an accumulation of thrust force on the threaded member can cause the drive assembly of the lubricator to separate from the lubricator, and this potential for a significant accumulation of thrust force on the threaded member can cause disassembly of the lubricator to be difficult or unsafe.

### SUMMARY OF THE INVENTION

In accordance with one aspect of the invention, there is provided a fluid holder. The fluid holder includes a housing having an inner surface defining a cavity, the housing defining at least one fluid outlet in communication with the cavity. The fluid holder also includes a piston in slidable engagement with the inner surface, the piston having first and second opposed surfaces with a threaded opening extending between the first and second surfaces, the first surface of the piston and the inner surface of the housing defining a fluid chamber in the cavity in communication with the at least one fluid outlet, and the piston being movable to expand or contract the fluid chamber. The fluid holder also includes a threaded member engageable with the threaded opening of the piston, a first portion of the threaded member extending from the first surface of the piston and a second portion of the threaded member extending out of the second surface of the piston, the threaded member being rotatably coupled to the housing on the first portion of the threaded member for rotation in the threaded opening of the piston such that rotation of the threaded member causes a force to be exerted by the threaded member on the housing and on the piston to move the piston in the cavity to expand or contract the fluid chamber.

The inner surface may include a cylindrically shaped sliding portion, and the piston may be in slidable engagement with the cylindrically shaped sliding portion.

The inner surface may also include a frustoconical terminating portion.

The first surface of the piston may be shaped complementarily to the frustoconical terminating portion.

The fluid holder may further include a mixer in communication with the first portion of the threaded member, the mixer configured to mix fluid urged out said at least one fluid outlet.

The mixer may include an auger configured to urge a fluid in a direction into the fluid chamber when the threaded member is rotated in a direction that causes the fluid chamber to contract.

The mixer may include an auger configured to urge a fluid in a direction out of the fluid chamber when the threaded member is rotated in a direction that causes the fluid chamber to contract.

The mixer may include a plurality of radial projections.

The piston may be in sealed engagement with the inner surface, and the fluid chamber may be open only at the at least one fluid outlet.

The second portion of the threaded member may be configured to be detachably coupled to a drive member for applying a torque to the threaded member.

The fluid holder may further include a drive assembly configured to be detachably coupled to the fluid holder, the drive assembly having a motor and a drive member coupled to the motor and configured to be detachably coupled to the second portion of the threaded member of the fluid holder for applying a torque to the threaded member.

The fluid holder may further include a processor circuit in communication with the motor for controlling the motor, the processor circuit operably configured to respond to signals received from a temperature sensor sensing a temperature of an object to be lubricated, to cause the motor to deliver more fluid from the fluid chamber when the object to be lubricated is at a higher temperature

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Aspects of the invention are illustrated, merely by way of example, in the accompanying drawings, in which
- Figure **1**: is a front cross sectional view of a fluid holder according to a first embodiment of the invention,
- Figure **2**: is a bottom view of the fluid holder of Figure **1****,**
- Figure **3**: is a front cross sectional view of a fluid holder according to a second embodiment of the invention,
- Figure **4**: is a perspective view of an alternative mixer in the fluid holder of Figure **3****,** and
- Figure **5**: is a front cross sectional view of an electromechanical lubricator including the fluid holder of Figure **1****.**

### DETAILED DESCRIPTION

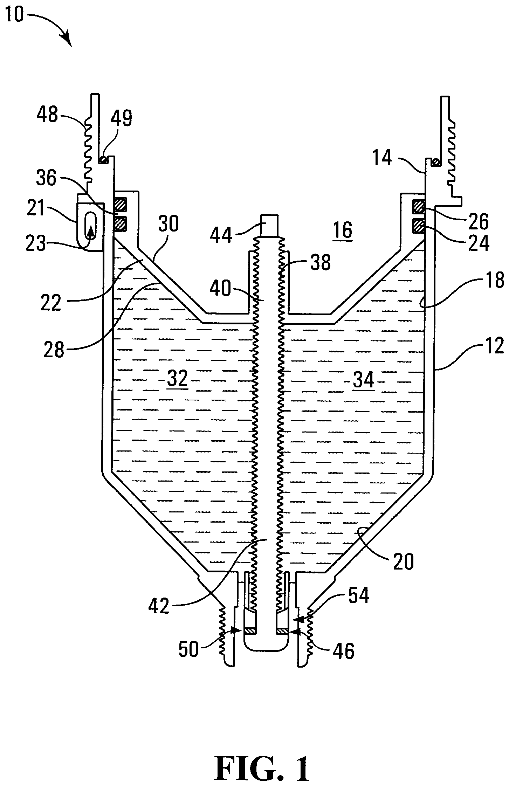

Referring to Figure **1****,** a fluid holder according to a first embodiment of the invention is shown generally at **10.** The fluid holder **10** includes a housing **12** having an inner surface **14** that defines a cavity **16.** In the illustrated embodiment, the inner surface **14** includes a cylindrically shaped sliding portion **18** and a generally frustoconical terminating portion **20.** Alternatively, the terminating portion of inner surface **14** may be conical, for example. Housing **12** preferably includes a tie-down **21** defining an eyelet **23,** and the eyelet **23** may receive a cord to facilitate attaching fluid holder **10** to an object (not shown), for example. However, it will be appreciated that equivalent results can be achieved with other configurations of the housing **12.**

A piston **22** is positioned in cavity **16** in slidable engagement with sliding portion **18** of the inner surface **14.** Piston **22** preferably includes sealing members such as O-rings **24** and **26** to facilitate slidable and sealed engagement with the inner surface **14.** Piston **22** includes a first surface **28** and an opposed second surface **30,** and is positioned in cavity **16** such that first surface **28** and inner surface **14** of housing **12** define a fluid chamber **32** in cavity **16.** In the illustrated example, the fluid chamber **32** holds a fluid, such as a lubricant **34.** Also, in the illustrated example, piston **22** has a circular outer flange **36** to engage cylindrical sliding portion **18** of inner surface **14,** and first surface **28** of piston **22** is generally frustoconically shaped to complement terminating portion **20** of inner surface **14.** Advantageously, this complementary configuration may enable first surface **28** of piston **22** to abut terminating portion **20** of inner surface **14** to force substantially all of lubricant **34** out of fluid chamber **32.** Piston **22** further defines a threaded opening **38** extending between the first surface **28** and the second surface **30** of the piston **22.**

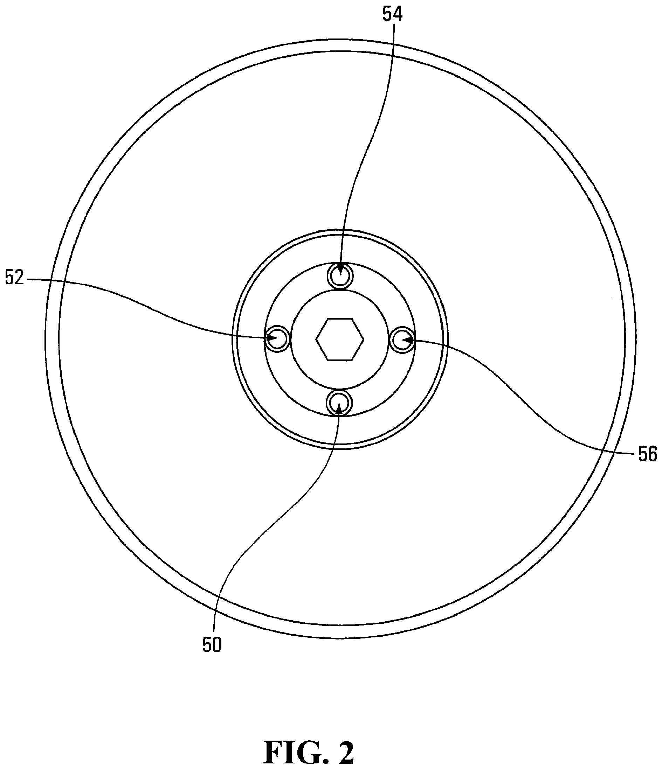

Housing **12** defines at least one fluid outlet **50** in communication with fluid chamber **32,** and preferably fluid chamber **32** is open only at the at least one fluid outlet **50.** Referring to Figure **2****,** the illustrated embodiment includes four fluid outlets **50, 52, 54,** and **56,** although it will be appreciated that other embodiments may include any number of fluid outlets. Returning to Figure **1****,** when piston **22** slides along sliding portion **18** of the inner surface **14,** first surface **28** of the piston **22** exerts a force on lubricant **34** in the fluid chamber **32,** urging lubricant **34** out fluid outlets **50, 52, 54,** and **56.**

Fluid holder **10** further includes a threaded shaft **40** (which may also be referred to as a "threaded member") which is in sealed threaded engagement with threaded opening **38** of piston **22.** Threaded shaft **40** includes a first portion **42** extending out of first surface **28** of piston **22,** and a second portion **44** extending out of second surface **30** of piston **22.** Second portion **44** of threaded shaft **40** may be configured to be detachably coupled to a drive member for applying a torque, for example by having a recess for receiving a tool bit or by any other known configuration. The first portion **42** of the threaded shaft **40** is rotatably coupled to the housing **12** for rotation in the threaded opening **38** of the piston **22.** In the illustrated example, a thrust bearing **46** positioned between the fluid outlets **50, 52, 54,** and **56** is supported by the housing **12,** and supports the threaded shaft **40** for rotation. Thrust bearing **46** may be a washer manufactured from Delrin™, which is available from Dupont™, for example.

Therefore, in operation, rotation of threaded shaft **40** may cause a force to be exerted by threaded shaft **40** on housing **12** and on piston **22** to urge piston **22** towards terminating portion **20** of inner surface **14,** urging lubricant **34** out of fluid chamber **32** through the at least one fluid outlet **50.** Pressure exerted by lubricant **34** on first surface **28** of piston **22** results in a thrust force on threaded shaft **40.** Advantageously, the thrust force on threaded shaft **40** is accommodated in the illustrated embodiment by thrust bearing **46,** and therefore a thrust force will not be exerted on a drive assembly that is applying a torque to the second portion **44** of the threaded shaft **40.**

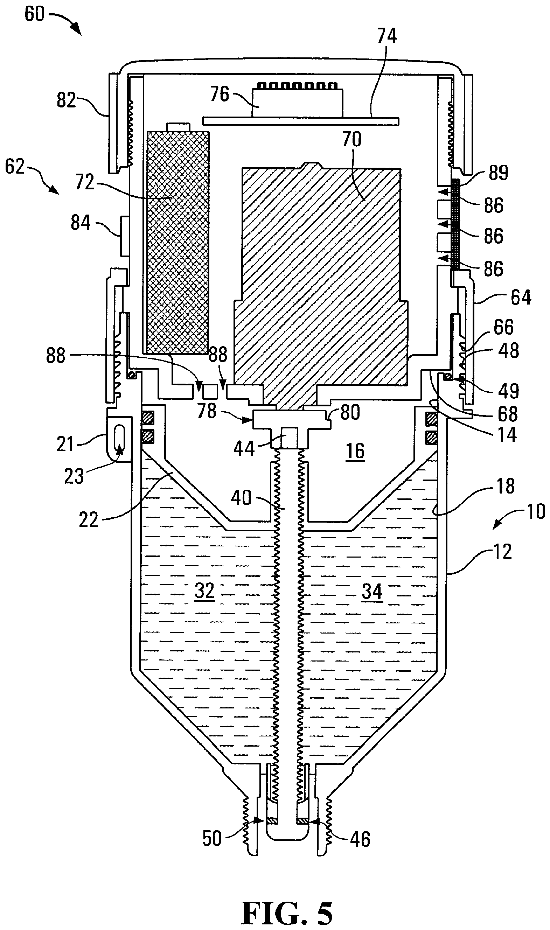

In the illustrated embodiment, housing **12** includes an external threaded surface **48** for engagement with a drive assembly (illustrated in Figure 5, for example), and a sealing member such as an O-ring **49** for sealing the cavity **16** from the outside when the fluid holder **10** is coupled to a drive assembly.

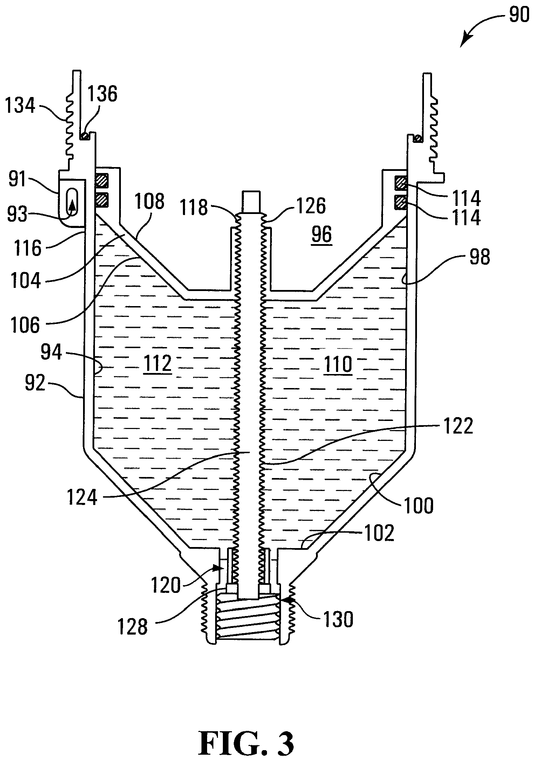

Referring to Figure **3****,** a fluid holder according to a second embodiment of the invention is shown generally at **90.** Fluid holder **90** includes a housing **92** having an inner surface **94** that defines a cavity **96.** In the illustrated embodiment, the inner surface **94** includes a cylindrically shaped sliding portion **98** and a frustoconically shaped terminating portion **100** that includes a generally flat surface **102.** Housing **92** preferably includes a tie-down **91** defining an eyelet **93,** and the eyelet **93** may receive a cord to facilitate attaching fluid holder **90** to an object (not shown), for example.

The fluid holder **90** further includes a piston **104** positioned in cavity **96** in slidable engagement with sliding portion **98** of inner surface **94.** Piston **104** includes a first surface **106** and a second opposite surface **108,** and is positioned in cavity **96** such that first surface **106** and inner surface **94** define a fluid chamber **110** in cavity **96** for holding a fluid such as a lubricant **112,** for example. First surface **106** of piston **104** is preferably frustoconically shaped to complement terminating portion **100** of inner surface **94,** which may advantageously enable first surface **106** to abut terminating portion **100** to force substantially all of lubricant **112** out of fluid chamber **110.** Piston **104** also preferably includes a circular outer flange **116** having sealing members such as O-rings **114** to facilitate slidable and sealed engagement with sliding portion **98** of inner surface **94.** Piston **104** further defines a threaded opening **118** extending between the first surface **106** and the second surface **108.**

Housing **92** defines at least one fluid outlet **120** in communication with the fluid chamber **110** such that when piston **104** slides along sliding portion **98,** first surface **106** exerts a force on lubricant **112** to urge lubricant **112** out of the at least one fluid outlet **120.**

Fluid holder **90** further includes a threaded shaft **122** (which may also be referred to as a "threaded member"), which is in threaded engagement with threaded opening **118** of piston **104.** Threaded shaft **122** includes a first portion **124** extending out of first surface **106,** and a second portion **126** extending out of second surface **108.** The first portion **124** is rotatably coupled to housing **92** at a thrust bearing **128** for rotation in threaded opening **118.** Thrust bearing **128** may be a washer manufactured from Delrin™, which is available from Dupont™, for example. Therefore, rotation of threaded shaft **122** may cause a force to be exerted by threaded shaft **122** on housing **92** and on piston **104** to urge piston **104** towards terminating portion **100,** urging lubricant **112** out of fluid chamber **110** through the at least one fluid outlet **120.** Pressure exerted by lubricant **112** on first surface **106** results in a thrust force that is accommodated by thrust bearing **128.** Advantageously, thrust force on threaded shaft **122** will not be exerted on a drive assembly that is applying a torque to second portion **126** of threaded shaft **122.** Second portion **126** may be configured to be detachably coupled to a drive member for applying a torque to threaded shaft **122.**

Housing **92** also preferably includes an external threaded surface **134** for engagement with a drive assembly (illustrated in Figure **5****,** for example), and a sealing member such as an O-ring **136** for sealing cavity **96** from the outside when fluid holder **90** is coupled to a drive assembly.

In the illustrated embodiment, an auger **130** (which may also be referred to as a "helix blender") is in communication with first portion **124** of threaded shaft **122,** and is positioned outside of fluid chamber **110.** Auger **130** is preferably coupled to first portion **124** of threaded shaft **122** by a friction fit, although alternatively auger **130** may be integrally formed with threaded shaft **122,** for example.

In some embodiments, auger **130** is includes threads that are in a same direction as the threads of threaded shaft **122,** and thus auger **130** is configured in these embodiments to urge a fluid such as lubricant **112** in a direction out of fluid chamber **110** when threaded shaft **122 is** rotated in a direction that causes fluid chamber **110 to** contract, and thus causes lubricant **112** to be urged out of fluid chamber **110.**

In some other embodiments, auger **130** is includes threads that are in an opposite direction to the threads of threaded shaft **122,** and thus auger **130** is configured in these embodiments to urge a fluid such as lubricant **112** in a direction into fluid chamber **110** when threaded shaft **122** is rotated in a direction that causes fluid chamber **110** to contract. Thus, in these embodiments, auger **130** urges fluid contrary to its direction of travel, imparting a more aggressive mixing action.

Whether the threads of auger **130** are in a same direction or opposite direction to the threads of threaded shaft **122,** auger **130** may function as a mixer (or as a blender) to mix or blend lubricant **112** when lubricant **112** is urged out of the at least one fluid outlet **120.** This mixing (or blending) function may be advantageous when lubricant **112** has become separated during prolonged storage, for example. This mixing (or blending) function may be accomplished by numerous alternative mixers. In the illustrated embodiment, auger **130** is positioned outside of the at least one fluid outlet **120,** but auger **130** may alternatively be positioned inside of the at least one fluid outlet **120.**

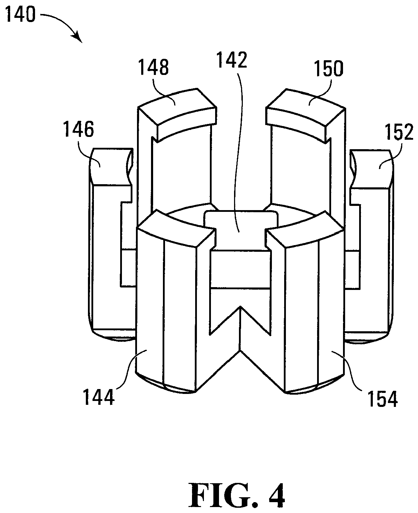

For example, referring to Figure **4****,** an alternative mixer (which may also be referred to as a "blender" or as a "paddle blender"), is shown generally at **140.** Mixer **140** may be substituted for auger **130** shown in Figure **3****.** Mixer **140** is also preferably coupled to first portion **124** of threaded shaft **122** by a friction fit, but may also alternatively be integrally formed with threaded shaft **122,** for example. Mixer **140** includes a projection **142** for being received in a recess of first portion **124** in a friction fit, and includes radial projections **144, 146, 148, 150, 152,** and **154** for mixing or blending lubricant **112** when lubricant **112** is urged out of the at least one fluid outlet **120.**

Referring to Figure **5****,** an embodiment of an electromechanical lubricator (which may also be referred to more generally as a "fluid holder") is shown generally at **60.** The electromechanical lubricator **60** includes a drive assembly **62** detachably couplable to fluid holder **10** of Figures **1** and **2****.** Although the electromechanical lubricator **60** is, for simplicity, illustrated and described with drive assembly **62** detachably couplable to fluid holder **10,** it will be appreciated that drive assembly **62** may also be detachably couplable to fluid holder **90** illustrated in Figure **3****,** for example. In the illustrated embodiment, drive assembly **62** includes a ring **64** having an internal threaded surface **66** for threadably engaging external threaded surface **48** of housing **12.** In the illustrated embodiment, external threaded surface **48** engages internal threaded surface **66** of ring **64** to urge O-ring **49** against a lower surface **68** of drive assembly **62** to seal cavity **16** from the outside.

In the illustrated embodiment, drive assembly **62** includes a drive motor **70** powered by a battery pack **72** and controlled by a processor circuit **74.** The processor circuit **74** receives inputs from a dip switch assembly **76,** which may be used to configure parameters for automatic scheduled delivery of the lubricant **34.** The delivery of lubricant **34** may, for example, be programmed in cycles wherein a predetermined volume of lubricant is delivered periodically in delivery cycles separated by predetermined intervals of time. The drive motor **70** is preferably geared to apply a torque to a cam coupling **78** that is detachably coupled to the second portion **44** of the threaded shaft **40.** The cam coupling **78** preferably includes a trigger **80** for triggering a limit switch (not shown) to count revolutions of cam coupling **78.** It will be appreciated that by counting revolutions of cam coupling **78,** an estimate may be calculated of the distance through which piston **22** has traveled along the sliding portion **18** of the inner surface **14** of the housing **12,** such that an estimate may be calculated of a volume of lubricant **34** that has been urged out of fluid chamber **32** through the at least one fluid outlet **50.** However, alternatively, processor circuit **74** may employ a timing function to estimate a volume of lubricant **34** that has been expelled from fluid chamber **32.** The drive assembly **62** also includes a threaded cap member **82** threadably engaged with drive assembly **62** for covering the internal components of the drive assembly **62.** However, it will be appreciated that in other embodiments, other configurations of drive assembly **62** may be used to apply a torque to the second portion **44** of the threaded shaft **40.**

Preferably, drive assembly **62** further includes a temperature sensor interface **84** for interfacing with a temperature sensor (not shown) operable to sense a temperature of an object to be lubricated (not shown). The temperature sensor may be a conventional temperature sensor that is well-known in the art. Preferably, processor circuit **74** responds to signals received from the temperature sensor (not shown) at temperature sensor interface **84,** and causes drive assembly **62** to deliver more lubricant **34** to the object to be lubricated (not shown) when the object to be lubricated is at a higher temperature. For example, when a signal received at temperature sensor interface **84** indicates that the object to be lubricated (not shown) exceeds one or more predefined thresholds, the interval of time between delivery cycles may be reduced, or the volume of lubricant delivered in delivery cycles may be increased, or the rate of lubricant delivery during delivery cycles may be increased, for example.

Preferably, the housing of the drive assembly **62** defines one or more openings illustrated generally at **86** for permitting air circulation in and through the inside of drive assembly **62.** The one or more openings **86** may be covered with a breathable material **89,** such as Tyvek™ available from Dupont™, for example, in order to permit air to enter the inside of the drive assembly **62** while preventing dust and other particles from entering the inside of drive assembly **62.** The housing of drive assembly **62** also preferably includes one or more openings shown generally at **88** to permit air from the inside of drive assembly **62** to circulate in and out of cavity **16.** Advantageously, when piston **22** is moved in a direction to expel lubricant **34** from fluid chamber **32,** air will enter cavity **16** through openings **86** and **88** in order to prevent a vacuum from forming in cavity **16.**

In operation, drive assembly **62** applies a torque to the second portion **44** of threaded shaft **40** to rotate the shaft and displace piston **22** along the length of the shaft to urge lubricant **34** out of fluid chamber **32.** Once substantially all of lubricant **34** has been expelled from fluid chamber **32,** the fluid holder **10** may be removed, and either refilled with lubricant **34** or discarded. The drive assembly **62** may be coupled to a new or refilled fluid holder **10** and reused.

Advantageously, thrust forces resulting from pressure of lubricant **34,** rotation of threaded shaft **40,** and displacement of piston **22** are accommodated by thrust bearing **46** of the fluid holder **10,** that is, the disposable component. Drive assembly **62,** which is desirably reused for numerous fluid holders **10,** tends not to experience a thrust force from the threaded shaft **40** in the configuration of the present invention, thus reducing wear and prolonging the useful life of the reusable drive assembly **62.**

Furthermore, reducing wear on the drive assembly **62** permits more efficient operation of drive assembly **62,** thereby reducing current drawn from battery pack **72,** and enabling operation of electromechanical lubricator **60** throughout a greater range of temperatures. It has also been found that electromechanical lubricator **60** can generate higher pressures of lubricant **34** as compared to some known electromechanical lubricators because of the reduced wear on the drive assembly **62.** For example, pressures in the lubricant **34** of over **200**psi have been achieved in electromechanical lubricators similar to the illustrated example, compared to approximately **70**psi for some known electromechanical lubricators.

In addition, absorption of thrust forces at thrust bearing **46,** rather than on drive assembly **62,** has been found to reduce the likelihood that fluid holder **10** will separate from drive assembly **62** as a result of accumulated thrust force on threaded shaft **40.** Accommodation and relief of thrust forces at thrust bearing **46** may also simplify the process of separating fluid holder **10** from drive assembly **62,** because there is less concern about an accumulated thrust force therebetween.

While specific embodiments of the invention have been described and illustrated, such embodiments should be considered illustrative of the invention only and not as limiting the invention. It will be apparent that certain changes and modifications may be practised within the scope of the appended claims.

## Claims

1. A fluid holder (10, 90) comprising:
a housing (12, 92) having an inner surface (14, 94) defining a cavity (16, 96), the housing (12, 92) defining at least one fluid outlet (50, 52, 54, 56, 120) in communication with the cavity (16, 96);
a piston (22, 104) in slidable engagement with the inner surface (14, 94), the piston (22, 104) having first (28, 106) and second (30, 108) opposed surfaces with a threaded opening (38, 118) extending between the first (28, 106) and second (30, 108) opposed surfaces of the piston (22, 104), the first surface (28, 106) of the piston (22, 104) and the inner surface (14, 94) of the housing (12, 92) defining a fluid chamber (32, 110) in the cavity (16, 96) in communication with the at least one fluid outlet (50, 52, 54, 56, 120), and the piston (22, 104) being movable to expand or contract the fluid chamber (32, 110); and
a threaded member (40, 122) engageable with the threaded opening (38, 118) of the piston (22, 104), a first portion (42, 124) of the threaded member (40, 122) extending from the first surface (28, 106) of the piston (22, 104) into the fluid chamber (32, 110), and a second portion (44, 126) of the threaded member (40, 122) extending from the second surface (30, 108) of the piston (22, 104) away from the fluid chamber (32, 110),
**characterized in that** the threaded member (40, 122) is rotatably coupled to the housing, at a position on the first portion (42, 124) of the threaded member (40, 122) and spaced apart from the piston (22, 104), for rotation in the threaded opening (38, 118) of the piston (22, 104) such that rotation of the threaded member (40, 122) in a fluid chamber contracting direction causes a force to be exerted by the first portion (42, 124) of the threaded member (40, 122) on the housing (12, 92) and on the piston (22, 104) to move the piston (22, 104) in the cavity (16, 96) to contract the fluid chamber (32, 110).

2. The fluid holder of claim 1 wherein the inner surface (14, 94) comprises a cylindrically shaped sliding portion (18, 98), and wherein the piston (22, 104) is in slidable engagement with the cylindrically shaped sliding portion. (18, 98)

3. The fluid holder of claim 1 or 2 wherein the inner surface (14, 94) comprises a frustoconical terminating portion (20, 100).

4. The fluid holder of claim 3 wherein the first surface (28, 106) of the piston (22, 104) is shaped complementarily to the frustoconical terminating portion (20, 100).

5. The fluid holder of claim 1, 2, 3, or 4 further comprising a mixer (130, 140) coupled to the first portion (42, 124) of the threaded member (40, 122), the mixer (130, 140) configured to mix fluid (34, 112) urged out said at least one fluid outlet (50, 52, 54, 56, 120).

6. The fluid holder of claim 5 wherein the mixer (130) includes an auger (130) configured to urge a fluid (34, 112) in a direction into the fluid chamber (32, 110) when the threaded member (40, 122) is rotated in said fluid chamber contracting direction.

7. The fluid holder of claim 5 wherein the mixer (130) includes an auger (130) configured to urge a fluid (34, 112) in a direction out of the fluid chamber (32, 110) when the threaded member (40, 122) is rotated in said fluid chamber contracting direction.

8. The fluid holder of claim 5 wherein the mixer (140) includes a plurality of radial projections (144, 146, 148, 150, 152, 154).

9. The fluid holder of any one of claims 1 to 8 wherein the piston (22, 104) is in sealed engagement with the inner surface (14, 94), and wherein the fluid chamber (32, 110) is open only at the at least one fluid outlet (50, 52, 54, 56, 120).

10. The fluid holder of any one of claims 1 to 9 wherein the second portion (44, 126) of the threaded member (40, 122) is configured to be detachably coupled to a drive member for applying a torque to the threaded member (40, 122).

11. The fluid holder of claim 10 further comprising a drive assembly (62) configured to be detachably coupled to the fluid holder (10, 90), the drive assembly (62) having a motor (70) and a drive member coupled to the motor (70) and configured to be detachably coupled to the second portion (44, 126) of the threaded member (40, 122) of the fluid holder (10, 90) for applying a torque to the threaded member (40, 122).

12. The fluid holder of claim 11 further comprising a processor circuit (74) in communication with the motor (70) for controlling the motor (70), the processor circuit (74) operably configured to respond to signals received from a temperature sensor sensing a temperature of an object to be lubricated, to cause the motor (70) to deliver more fluid (34, 112) from the fluid chamber (32, 110) when the object to be lubricated is at a higher temperature.

13. The fluid holder of any one of claims 1 to 12 further comprising a thrust bearing (46, 128) supported by the housing (12, 92) and supporting the first portion (42, 124) of the threaded member (40, 122) for rotation.

14. The fluid holder of any one of claims 1 to 13 further comprising a fluid (34, 112) in the fluid chamber (32, 110).

15. The fluid holder of claim 14 wherein the fluid (34, 112) comprises a lubricant.

## Patentansprüche

1. Fluidbehältnis (10, 90) umfassend:
ein Gehäuse (12, 92) mit einer Innenfläche (14, 94), die einen Hohlraum (16, 96) definiert, wobei das Gehäuse (12, 92) mindestens einen mit dem Hohlraum (16, 96) in Verbindung stehenden Fluidauslass (50, 52, 54, 56, 120) definiert;
einen mit der Innenfläche (14, 94) in einem gleitenden Eingriff befindlichen Kolben (22, 104), wobei der Kolben (22, 104) erste (28, 106) und zweite (30, 108) gegenüberliegende Flächen mit einer mit Gewinde versehenen Öffnung (38, 118) aufweist, welche sich zwischen der ersten (28, 106) und zweiten (30, 108) gegenüberliegenden Fläche des Kolbens (22, 104) erstreckt, wobei die erste Fläche (28, 106) des Kolbens (22, 104) und die Innenfläche (14, 94) des Gehäuses (12, 92) eine Fluidkammer (32, 110) in dem Hohlraum (16, 96) definiert, welche mit dem mindestens einen Fluidauslass (50, 52, 54, 56, 120) in Verbindung steht, und der Kolben (22, 104) beweglich ist, damit die Fluidkammer (32, 110) ausgedehnt oder zusammengezogen werden kann; und
ein mit Gewinde versehenes Element (40, 122), welches mit der mit Gewinde versehenen Öffnung (38, 118) des Kolbens (22, 104) in Eingriff gelangen kann, wobei ein erster Abschnitt (42, 124) des mit Gewinde versehenen Elements (40, 122) sich von der ersten Fläche (28, 106) des Kolbens (22, 104) in die Fluidkammer (32, 110) erstreckt, und ein ein zweiter Abschnitt (44, 126) des mit Gewinde versehenen Elements (40, 122) sich von der zweiten Fläche (30, 108) des Kolbens (22, 104) weg von der Fluidkammer (32, 110) erstreckt,
**dadurch gekennzeichnet, dass** das mit Gewinde versehene Element (40, 122), in einer Position am ersten Abschnitt (42, 124) des mit Gewinde versehenen Elements (40, 122) und von dem Kolben (22, 104) beabstandet angeordnet, mit dem Gehäuse drehbar verbunden ist, damit es in der mit Gewinde versehenen Öffnung (38, 118) des Kolbens (22, 104) derart drehen kann, dass eine Rotation des mit Gewinde versehenen Elements (40, 122) in einer die Fluidkammer zusammenziehenden Richtung bewirkt, dass eine Kraft durch den ersten Abschnitt (42, 124) des mit Gewinde versehenen Elements (40, 122) auf das Gehäuse (12, 92) und auf den Kolben (22, 104) ausgeübt wird, um den Kolben (22, 104) in dem Hohlraum (16, 96) zu bewegen, um die Fluidkammer (32, 110) zusammenzuziehen.

2. Fluidbehältnis nach Anspruch 1, wobei die Innenfläche (14, 94) einen zylindrisch geformten Gleitabschnitt (18, 98) aufweist, und wobei sich der Kolben (22, 104) in einem gleitenden Eingriff mit dem zylindrisch gebildeten Gleitabschnitt befindet. (18, 98)

3. Fluidbehältnis nach Anspruch 1 oder 2, wobei die Innenfläche (14, 94) einen frustokonisch abschließenden Abschnitt (20, 100) aufweist.

4. Fluidbehältnis nach Anspruch 3, wobei die Innenfläche (28, 106) des Kolbens (22, 104) komplementär zum frustokonisch abschließenden Abschnitt (20, 100) geformt ist.

5. Fluidbehältnis nach Anspruch 1, 2, 3 oder 4, welches ferner einen an den ersten Abschnitt (42, 124) des mit Gewinde versehenen Elements (40, 122) gekoppelten Mischer (130, 140) aufweist, wobei der Mischer (130, 140) dazu ausgebildet ist, aus dem mindestens einen Fluidauslass (50, 52, 54, 56, 120) gedrängtes Fluid (34, 112) zu vermischen.

6. Fluidbehältnis nach Anspruch 5, wobei der Mischer (130) eine Schnecke (130) aufweist, die dazu ausgebildet ist, ein Fluid (34, 112) in eine Richtung in die Fluidkammer (32, 110) zu drängen, wenn das mit Gewinde versehene Element (40, 122) in die die Fluidkammer zusammenziehende Richtung gedreht wird.

7. Fluidbehältnis nach Anspruch 5, wobei der Mischer (130) eine Schnecke (130) aufweist, die dazu ausgebildet ist, ein Fluid (34, 112) in eine Richtung aus der Fluidkammer (32, 110) zu drängen, wenn das mit Gewinde versehene Element (40, 122) in die die Fluidkammer zusammenziehende Richtung gedreht wird.

8. Fluidbehältnis nach Anspruch 5, wobei der Mischer (140) eine Mehrzahl von radialen Vorsprüngen (144, 146, 148, 150, 152, 154) aufweist.

9. Fluidbehältnis nach einem der Ansprüche 1 bis 8, wobei sich der Kolben (22, 104) in einem versiegelten Eingriff mit der Innenfläche (14, 94) befindet, und wobei die Fluidkammer (32, 110) nur an dem mindestens einen Fluidauslass (50, 52, 54, 56, 120) geöffnet ist.

10. Fluidbehältnis nach einem der Ansprüche 1 bis 9, wobei der zweite Abschnitt (44, 126) des mit Gewinde versehenen Elements (40, 122) dazu ausgebildet ist, mit einem Antriebselement lösbar verbunden zu werden, um ein Drehmoment auf das mit Gewinde versehene Element (40, 122) aufzubringen.

11. Fluidbehältnis nach Anspruch 10 ferner umfassend eine Antriebseinheit (62), die dazu ausgebildet ist, an das Fluidbehältnis (10, 90) lösbar gekoppelt zu werden, wobei die Antriebseinheit (62) einen Motor (70) und ein an den Motor (70) gekoppelten Antriebselement aufweist und dazu ausgebildet ist, an den zweiten Abschnitt (44, 126) des mit Gewinde versehenen Elements (40, 122) des Fluidbehältnisses (10, 90) lösbar gekoppelt zu werden, um ein Drehmoment auf das mit Gewinde versehene Element (40, 122) aufzubringen.

12. Fluidbehältnis nach Anspruch 11, ferner umfassend eine mit dem Motor (70) in Verbindung stehende Prozessorschaltung (74) zum Steuern des Motors (70), wobei die Prozessorschaltung (74) dazu ausgelegt ist, auf Signale zu antworten, die von einem Temperatursensor erhalten werden, der eine Temperatur eines zu schmierenden Objektes erfasst, um den Motor (70) dazu zu veranlassen, mehr Fluid (34, 112) von der Fluidkammer (32, 110) zu liefern, wenn das zu schmierende Objekt eine höhere Temperatur aufweist.

13. Fluidbehältnis nach einem der Ansprüche 1 bis 12, ferner umfassend einen von dem Gehäuse (12, 92) gestützten Drucklager (46, 128), welcher den ersten Abschnitt (42, 124) des mit Gewinde versehenen Elements (40, 122) zum Drehen unterstützt.

14. Fluidbehältnis nach einem der Ansprüche 1 bis 13 ferner umfassend ein Fluid (34, 112) in der Fluidkammer (32, 110).

15. Fluidbehältnis nach Anspruch 14, wobei das Fluid (34, 112) ein Schmiermittel umfasst.

## Revendications

1. Support de fluide (10, 90) comprenant:
un boîtier (12, 92) ayant une surface intérieure (14, 94) définissant une cavité (16, 96), le boîtier (12, 92) définissant au moins une sortie de fluide (50, 52, 54, 56, 120) en communication avec la cavité (16, 96);
un piston (22, 104) en engagement coulissant avec la surface intérieure (14, 94), le piston (22, 104) ayant des première (28, 106) et deuxième (30, 108) surfaces opposées avec une ouverture filetée (38, 118) s'étendant entre les première (28, 106) et deuxième (30, 108) surfaces opposées du piston (22, 104), la première surface (28, 106) du piston (22, 104) et la surface intérieure (14, 94) du boîtier (12, 92) définissant une chambre de fluide (32, 110) dans la cavité (16, 96) en communication avec l'au moins une sortie de fluide (50, 52, 54, 56, 120), et le piston (22, 104) pouvant se déplacer pour dilater ou contracter la chambre de fluide (32, 110); et
un élément fileté (40, 122) pouvant venir en prise avec l'ouverture filetée (38, 118) du piston (22, 104), une première partie (42, 124) de l'élément fileté (40, 122) s'étendant à partir de la première surface (28, 106) du piston (22, 104) dans la chambre de fluide (32, 110), et une deuxième partie (44, 126) de l'élément fileté (40, 122) s'étendant à partir de la deuxième surface (30, 108) du piston (22, 104) à l'écart de la chambre de fluide (32, 110),
**caractérise en ce que** l'élément fileté (40, 122) est couplé de manière rotative au boîtier à une position sur la première partie (42, 124) de l'élément fileté (40, 122) espacé du piston (22, 104), pour la rotation dans l'ouverture filetée (38, 118) du piston (22, 104) si bien que la rotation de l'élément fileté (40, 122) dans une direction contractant la chambre de fluide provoque une force à être exercée par la première partie (42, 124) de l'élément fileté (40, 122) sur le boîtier (12, 92) et sur le piston (22, 104) pour déplacer le piston (22, 104) dans la cavité (16, 96) pour contracter la chambre de fluide (32, 110).

2. Support de fluide selon la revendication 1, dans lequel la surface intérieure (14, 94) comprend une partie coulissante de forme cylindrique (18, 98), et dans lequel le piston (22, 104) est en engagement coulissant avec la partie coulissante de forme cylindrique. (18, 98)

3. Support de fluide selon la revendication 1 ou 2, dans lequel la surface intérieure (14, 94) comprend une partie de terminaison tronconique (20, 100).

4. Support de fluide selon la revendication 3, dans lequel la première surface (28, 106) du piston (22, 104) est conformée de manière complémentaire à la partie de terminaison tronconique (20, 100).

5. Support de fluide selon la revendication 1, 2, 3 ou 4, comprenant en outre un mélangeur (130, 140) couplé à la première portion (42, 124) de l'élément fileté (40, 122), le mélangeur (130, 140) étant configuré pour mélanger le fluide (34, 112) expulsé par ladite au moins une sortie de fluide (50, 52, 54, 56, 120).

6. Support de fluide selon la revendication 5, dans lequel le mélangeur (130) comprend une vis sans fin (130) configurée pour pousser un fluide (34, 112) dans une direction dans la chambre de fluide (32, 110) lorsque l'élément fileté (40, 122) est mis en rotation dans ladite direction contractant la chambre de fluide.

7. Support de fluide selon la revendication 5, dans lequel le mélangeur (130) comprend une vis sans fin (130) configurée pour pousser un fluide (34, 112) dans une direction hors de la chambre de fluide (32, 110) lorsque l'élément fileté (40, 122) est mis en rotation dans ladite direction contractant la chambre de fluide.

8. Support de fluide selon la revendication 5, dans lequel le mélangeur (140) comprend une pluralité de saillies radiales (144, 146, 148, 150, 152, 154).

9. Support de fluide selon l'une quelconque des revendications 1 à 8, dans lequel le piston (22, 104) est en engagement étanche avec la surface intérieure (14, 94), et dans lequel la chambre de fluide (32, 110) n'est ouverte qu'à l'au moins une sortie de fluide (50, 52, 54, 56, 120).

10. Support de fluide selon l'une quelconque des revendications 1 à 9, dans lequel la deuxième partie (44, 126) de l'élément fileté (40, 122) est configurée pour être couplée de manière amovible à un élément d'entraînement pour appliquer un couple à l'élément fileté (40, 122).

11. Support de fluide selon la revendication 10, comprenant en outre un ensemble d'entraînement (62) configuré pour être couplé de manière amovible au support de fluide (10, 90), l'ensemble d'entraînement (62) comportant un moteur (70) et un élément d'entraînement couplé au moteur (70) et configuré pour être couplé de manière amovible à la deuxième partie (44, 126) de l'élément fileté (40, 122) du support de fluide (10, 90) pour appliquer un couple à l'élément fileté (40, 122).

12. Support de fluide selon la revendication 11, comprenant en outre un circuit processeur (74) en communication avec le moteur (70) pour commander le moteur (70), le circuit processeur (74) étant configuré de manière opérationnelle pour répondre à des signaux reçus d'un capteur de température détectant une température d'un objet à lubrifier, pour amener le moteur (70) à délivrer plus de fluide (34, 112) à partir de la chambre de fluide (32, 110) lorsque l'objet à lubrifier est à une température plus élevée.

13. Support de fluide selon l'une quelconque des revendications 1 à 12, comprenant un palier de butée (46, 128) supporté par le boîtier (12, 92) et supportant la première partie (42, 124) de l'élément fileté (40, 122) pour la rotation.

14. Support de fluide selon l'une quelconque des revendications 1 à 13, comprenant en outre un fluide (34, 112) dans la chambre de fluide (32, 110).

15. Support de fluide selon la revendication 14, dans lequel le fluide (34, 112) comprend un lubrifiant.
